# EUROPÄISCHE PATENTSCHRIFT

(11) **EP 2 918 993 B1**
(45) Veröffentlichungstag und Bekanntmachung des Hinweises auf die Patenterteilung: **16.08.2017**
(21) Anmeldenummer: 15155605.7
(22) Anmeldetag: 18.02.2015
(51) Int. Cl.: G01N 17/00, G01N 27/12, G01N 15/00

(54) **VERFAHREN UND VORRICHTUNG ZUM ANZEIGEN VON SCHIMMELPILZWACHSTUM IN EINER ZU ÜBERWACHENDEN UMGEBUNG**
METHOD AND DEVICE FOR DISPLAYING THE GROWTH OF MOULD IN A MONITORED ENVIRONMENT
PROCÉDÉ ET DISPOSITIF D'AFFICHAGE D'UNE CROISSANCE DE MOISISSURES DANS UN ENVIRONNEMENT SOUS SURVEILLANCE

(30) Priorität: 01.03.2014 DE 102014003093
(43) Veröffentlichungstag der Anmeldung: 16.09.2015
(73) Patentinhaber: Warscheid, Thomas, 26215 Wiefelstede (DE)
(72) Erfinder: Warscheid, Thomas, 26215 Wiefelstede (DE)
(74) Vertreter: Jabbusch, Matthias

(56) Entgegenhaltungen:
- US-A1- 2004 263 331
- US-B1- 6 798 220

## Beschreibung

Die Erfindung betrifft ein Verfahren zum Anzeigen von Schimmelpilzwachstum in einer zu überwachenden Umgebung, wobei zwei unter elektrischer Spannung stehende, zueinander beabstandete Elektroden dieser Umgebung ausgesetzt werden, und wobei Schimmelpilzsporen unter für diese günstigen Bedingungen auf wenigstens einer den Elektroden zugeordneten Bewuchsfläche heranwachsen, wobei aus den Schimmelpilzsporen entstehende Schimmelpilze bei einem bestimmten Wachstum eine elektrisch leitende Verbindung zwischen den Elektroden ausbilden und einen Stromkreislauf, zwischen den unter Spannung stehenden Elektroden, schließen, und wobei durch einen durch das Schimmelpilzwachstum ausgelösten Stromfluss in dem Stromkreislauf ein elektrisches Signal erzeugt wird. Des Weiteren betrifft die Erfindung eine Vorrichtung zum Anzeigen von Schimmelpilzwachstum in einer zu überwachenden Umgebung, bei der wenigstens zwei Elektroden mit Abstand zueinander angeordnet sind, wobei die Elektroden jeweils an einem Pol einer Spannungsquelle angeschlossen sind und den Elektroden wenigstens eine Bewuchsfläche zugeordnet ist, und zwischen wenigstens einer der Elektroden und der Bewuchsfläche ein elektrisch nichtleitender Spalt ausgebildet ist. Weiter betrifft die Erfindung auch ein Verfahren zum Herstellen einer Vorrichtung zum Anzeigen von Schimmelpilzwachstum in einer zu überwachenden Umgebung.Eine solche Umgebung kann beispielsweise ein Teil eines Gebäudes, wie ein Raum, eine Dach- oder Wandkonstruktion, ein ganzes Haus oder aber ein Seecontainer mit leicht verderblichen Lebensmitteln oder anderen für Schimmelpilzbefall anfälligen Produkten sein. All diesen Umgebungen ist dabei gemein, dass bei ungenügender Durchlüftung und hoher Luftfeuchte optimale Bedingungen für Schimmelpilzwachstum bestehen. Neben dem Verderb von Lebensmitteln stellen Schimmelpilze in Wohnungen auch ein erhöhtes Risiko für eine Vielzahl von Erkrankungen, wie Asthma und Allergien, dar. Liegt ein Schimmelpilzbefall in einer Wohnung oder einem Haus vor, so sind, wenn dieser bereits sichtbar ist, zumeist umfangreiche und damit kostenintensive Sanierungen erforderlich. Ziel ist es daher einen Schimmelpilzbefall bzw. Bedingungen unter denen Schimmelpilzwachstum möglich ist möglichst früh zu erkennen.

Aus dem Stand der Technik sind dafür verschiedene Vorrichtungen bekannt, bei denen eine Risikobewertung zumeist indirekt über eine Messung der Temperatur und der Luftfeuchte der Umgebung erfolgt.

Ein Verfahren, bei dem Schimmelpilzsporen von Schimmelpilzen auf einem dehydratisierten Zeolithsubstrat direkt erfasst werden, ist in der DE 10 2010 047 465 A1 offenbart. Anhand eines Messwertes einer Impedanzmessung, einer Leitfähigkeits-messung oder anhand reflektierter Strahlen einer Lichtquelle wird dabei eine Beladung des dehydratisierten Zeolithsubstrats mit Schimmelpilzsporen ermittelt. Dieses Verfahren birgt jedoch eine hohe Fehlerquelle, da sich auch andere Partikel aus der Raumluft auf dem Zeolithsubstrat ablagern können und zu verfälschten Messwerten führen.

Eine Vorrichtung mit der Schimmelpilzbefall in einem frühen Stadium erkannt werden soll ist aus der US 2004/0263331 A1 bekannt, die einen elektro-optischen Sensor zum Detektieren von Schimmel- und Pilzwachstum zeigt. Dieser umfasst eine mit Nährstoffen behandelte Oberfläche, auf welcher mit einer elektro-optischen Sender/Empfängereinheit ein Wachstum von Schimmel und/oder Pilzen auf der mit Nährstoffen behandelten Fläche erfasst werden kann. Neben einem elektro-optischen Sensor wird ganz allgemein auch vorgeschlagen einen Schalter auszubilden, bei dem ein offener Kontakt durch zufälliges Schimmelpilzwachstum geschlossen werden soll. Nachteilig ist dabei jedoch, dass bereits Schimmelpilze wachsen und somit eine bereits erfolgte Schädigung von Wohnungen oder leicht verderblichen Lebensmitteln in Seecontainern erfolgt sein kann.

Aus der US 6798220 B1 ist ein Feuchtigkeitssensor zum Erfassen der Feuchtigkeit in einer Wand offenbart. Dieser Feuchtigkeitssensor soll einen ersten und einen zweiten Messfühler aufweisen, die mit Abstand zueinander in der Wand angeordnet werden. Mit den Messfühlern kann dann ein möglicher Stromfluss zwischen den Messfühlern aufgrund von Feuchtigkeit in der Wand erfasst werden. Die Wand kann dabei in einem Bereich zwischen den Messfühlern ganz allgemein auch eine Bewuchsfläche für den Fall sein, wenn aufgrund der Feuchtigkeit Schimmelpilzwachstum auf oder in der Wand erfolgt ist. Gemessen wird jedoch lediglich Feuchtigkeit in der Wand im Bereich zwischen den Messfühlern. Die Feuchtigkeit ist so nur ein Indikator dafür, dass auf der Wand Schimmelwachstum möglich sein könnte.

Aufgabe der Erfindung ist es ein Verfahren und eine Vorrichtung zur Früherkennung von Schimmelpilzwachstum und Bedingungen, unter denen dieses möglich ist, bereit zu stellen, das eine sichere Anzeige und eine kostengünstige Überwachung einer bestimmten Umgebung über einen längeren Zeitraum gewährleistet.

Die Lösung der Aufgabe erfolgt mit einem Verfahren mit den Merkmalen des Patentanspruchs 1 und einer Vorrichtung mit den Merkmalen des Patentanspruchs 4. Weiterbildungen und vorteilhafte Ausgestaltungen der Erfindung sind in den nachgeordneten Unteransprüchen angegeben.

Das Verfahren zum Anzeigen von Schimmelpilzwachstum in einer zu überwachenden Umgebung, wobei zwei unter elektrischer Spannung stehende, zueinander beabstandete Elektroden dieser Umgebung ausgesetzt werden, und wobei Schimmelpilzsporen unter für diese günstigen Bedingungen auf wenigstens einer der Elektroden zugeordneten Bewuchsfläche heranwachsen, wobei aus den Schimmelpilzsporen entstehende Schimmelpilze bei einem bestimmten Wachstum, insbesondere Hyphenwachstum, eine elektrisch leitende Verbindung zwischen den Elektroden ausbilden und einen Stromkreislauf, zwischen den unter elektrischer Spannung stehenden Elektroden, schließen, und wobei durch einen durch das Schimmelpilzwachstum ausgelösten Stromfluss in dem Stromkreislauf ein elektrisches Signal erzeugt wird, zeichnet sich dadurch aus, dass die Bewuchsfläche gezielt mit Schimmelpilzsporen angeimpft wird. Wenn jetzt in der zu überwachenden Umgebung für Schimmelpilze günstige Bedingungen vorliegen, werden diese auch auf der Bewuchsfläche heranwachsen und zu einem, bezogen auf einen sichtbaren Schimmelpilzbefall, frühen Stadium des Schimmelpilzwachstums den Stromkreislauf der unter Spannung stehenden Elektroden schließen. Dabei überbrücken einzelne Hyphen der Schimmelpilze den Abstand der Elektroden, wobei der Stromkreislauf durch in Hyphen der Schimmelpilze befindliche wässrige Lösung geschlossen wird.

Mit dem durch das Schimmelpilzwachstum bedingten Stromfluss in dem Stromkreislauf erzeugten, elektrischen Signal kann vorteilhafterweise ein Alarm ausgelöst werden. In einer betroffenen Wohnung können dann rechtzeitig Maßnahmen getroffen werden, um ein weiteres Schimmelpilzwachstum zu unterbinden und so größere Sanierungen der Wohnung bzw. des gesamten Gebäudes zu vermeiden. Bei in einem Seecontainer transportierten Lebensmitteln oder anderen Gegenständen kann das Verfahren auch dazu dienen, festzustellen, ob ein Weitertransport des Seecontainers lohnt oder einzelne noch nicht verdorbene Lebensmittel/Gegenstände durch z. B. rechtzeitiges Umladen oder Klimatisieren der Seecontainer noch nutzbar sind. Auch können von Schimmelpilzen befallende Seecontainer aussortiert werden bzw. im Vorfeld entsprechende Schutzmaßnahmen für an diesen Seecontainern arbeitende Personen getroffen werden.

Um eine möglichst hohe Sensivität und damit frühe Erkennung von Schimmelpilzwachstum zu gewährleisten, ist die Bewuchsfläche gezielt mit Schimmelpilzsporen angeimpft, d.h. belegt. Die Schimmelpilzsporen werden dazu vorteilhafterweise mit einer Benetzungslösung, beispielsweise 0,001% Tween® 80, auf die Bewuchsfläche aufgebracht. In weiterer Ausgestaltung können dafür Schimmelpilzsporen ausgewählt werden, die in einem betreffenden, zu überwachenden Schadensfall zu erwarten sind und an denen somit ein besonderes Interesse besteht. Bevorzugte Schimmel-pilzkulturen sind beispielsweise "Schwärzepilze" der Gattungen Cladosporium spec., Alternaria spec., Aureobasisidium spec. oder Ulocladium spec., "Allergene Schimmel-pilze" der Gattungen Penicillium spec., Aspergillus spec. oder Acremonium spec., "Toxigene Schimmelpilze" der Gattungen Chaetomium spec., Paecilomyces spec. oder Stachybotrys spec. bzw. besondere "Schadpilze" wie Trichothecium spec., Mucor spec., Rhizopus spec., Exophiala spec., Fusarium spec. und Trichoderma spec..

Die Vorrichtung zum Anzeigen von Schimmelpilzwachstum in einer zu überwachenden Umgebung, bei der wenigstens zwei Elektroden mit Abstand zueinander angeordnet sind, wobei die Elektroden jeweils an einen Pol einer Spannungsquelle angeschlossen sind und den Elektroden wenigstens eine Bewuchsfläche zugeordnet ist, und zwischen wenigstens einer der Elektroden und der Bewuchsfläche ein elektrisch nichtleitender Spalt ausgebildet ist, zeichnet sich erfindungsgemäß dadurch aus, dass die Bewuchsfläche mit Schimmelpilzsporen von bei einem Schadensfall vermutlich auftretenden Schimmelpilzen beimpft ist, dass die Vorrichtung in einem luftgängigen Gehäuse angeordnet ist, das wenigstens eine entsprechende Lüftungsöffnung aufweist, und dass der Spannungsquelle und/oder einer Leitung zu der Spannungsquelle eine Messeinrichtung einer Anzeigeeinheit zugeordnet ist. Durch Schimmelpilzwachstum auf der wenigstens einen Bewuchsfläche kann dann entsprechend dem vorbezeichneten Verfahren ein Stromkreislauf geschlossen werden, so dass zwischen den Polen der Spannungsquelle ein Strom fließt, der messbar ist. Der Spalt weist dabei unter Vermeidung einer elektrisch leitenden Verbindung zwischen den Elektroden stets eine Weite auf, die größer ist als der Durchmesser von sich möglicherweise an den Elektroden oder der Bewuchsfläche anlagernden Guttationströpfchen, insbesondere wenigstens dem Doppelten des maximal zu erwartenden Durchmessers eines Guttationströpfchens entspricht. Ein unbeabsichtigter Stromfluss, der zu einer Fehlanzeige führen könnte, ist damit sicher vermieden. Nach einer Weiterbildung weist der Spalt zwischen einer der Elektroden und der Bewuchsfläche bevorzugt eine Weite auf, die zwischen 1 mm und 3 mm beträgt.

Die Abmessungen von Elektroden und Bewuchsfläche können weitestgehend beliebig festgelegt werden, d.h. je nach benötigter Sensivität verkleinert oder vergrößert werden. Einen besonderen Einfluss auf die Sensivität der Vorrichtung hat dabei der elektrisch nichtleitende Spalt und insbesondere dessen Länge bezogen auf die Abmessungen der Elektroden und der Bewuchsfläche sowie dessen Länge absolut gesehen, wobei sich der Spalt wenigstens über die gesamte Länge eines jeweiligen Randes der Elektroden und der Bewuchsfläche erstreckt, zwischen denen der Spalt ausgebildet ist. Je länger dieser Spalt ausgebildet ist, desto höher ist auch die Empfindlichkeit der Vorrichtung beim Anzeigen von Schimmelpilzwachstum, da mit zunehmender Länge die Wahrscheinlichkeit zunimmt, das Hyphen der Schimmelpilze den Spalt überbrücken.

In weiterer Ausgestaltung weist die wenigstens eine Bewuchsfläche wenigstens ein Testmaterial auf, das sich vorteilhafterweise über deren gesamte Fläche erstreckt. Das Testmaterial entspricht möglichst einem in der zu überwachenden Umgebung befindlichen Material, insbesondere einem für die Überwachung einer Umgebung bzw. eines Gegenstandes besonders interessanten Material, d.h. beispielsweise einem für Schimmelpilzbefall anfälligem Material. Dieses wird daher vorteilhafterweise in Abhängigkeit von der zu überwachenden Umgebung bzw. dem zu überwachenden Gegenstand festgelegt und ermöglicht so eine gezielte Überwachung mit hoher Empfindlichkeit für Schimmelpilzbefall der Umgebung bzw. des Gegenstands. Mögliche Testmaterialien in Abhängigkeit von einer jeweiligen Zielstellung sind z. B. Mineralwolle, Tapete, Malervlies, Textilien, Papier, Farben, Kunststoffe, Pressholz etc.. Je nach Um-gebung kann es auch sinnvoll sein, mehrere verschiedene Testmaterialien miteinander zu kombinieren.

Für die Überwachung von Gebäuden oder Wohnungen kann die Vorrichtung mit Vorteil in Wänden dieser angeordnet sein, wobei das Testmaterial dann dem für Schimmel-pilzbefall vermutlich anfälligsten Werkstoff der Wand entspricht, z. B. Gipskarton. Bei einer Anordnung im Wandputz kann z. B. Tapete oder Malervlies ein bevorzugtes Testmaterial sein. Beiden Anordnungen gemein ist dabei, dass die Vorrichtung jeweils nicht sichtbar ist, somit sehr unauffällig platzierbar ist. Eine spätere Zugänglichkeit zu der Vorrichtung ist bei der Platzierung nicht zwingend erforderlich.

Um ein effektives Anschlagen der Vorrichtung vor einem Schimmelpilzbefall der zu überwachenden Umgebung oder des zu überwachenden Gegenstandes zu gewährleisten, ist die Bewuchsfläche, d.h. insbesondere das Testmaterial, mit Schimmelpilzsporen von bei einem Schadensfall vermutlich auftretenden Schimmelpilzen beimpft. Das Schimmelpilzwachstum beginnt dann begünstigt auf der Bewuchsfläche, bevor die Umgebung oder der zu überwachende Gegenstand befallen wird, so dass in jedem Fall ein frühes Anzeigen der Bedingungen, unter denen Schimmelpilzwachstum möglich ist, gegeben ist. Je nach Testmaterial und Umgebung kann die Bewuchsfläche mit verschiedenen Schimmelpilzsporen auch mehrerer Gattungen belegt werden, z. B. aus der nachfolgenden, nicht abschließenden Aufzählung umfassend "Schwärzepilze" der Gattungen Cladosporium spec., Alternaria spec., Aureobasisidium spec. oder Ulocladium spec., "Allergene Schimmelpilze" der Gattungen Penicillium spec., Aspergillus spec. oder Acremonium spec., "Toxigene Schimmelpilze" der Gattungen Chaetomium spec., Paecilomyces spec. oder Stachybotrys spec. bzw. besondere "Schadpilze" wie Trichothecium spec., Mucor spec., Rhizopus spec., Exophiala spec., Fusarium spec. und Trichoderma spec..

Nach einer vorteilhaften Ausgestaltung ist die Bewuchsfläche mit wenigstens einem Abschnitt zwischen den Elektroden angeordnet, so dass die Schimmelpilze auf der Bewuchsfläche zwischen den beiden Elektroden anwachsen und bei entsprechender Ausbreitung zwangsläufig eine elektrisch leitende Verbindung zwischen den Elektroden ausbilden. Die Bewuchsfläche kann dabei entweder vollständig zwischen den Elektroden angeordnet sein, wobei zu jeder Elektrode ein elektrisch nichtleitender Spalt ausgebildet ist oder eine der beiden Elektroden zumindest teilweise überlappend oder zumindest in unmittelbarem Kontakt zu dieser stehend angeordnet sein. Beiden Ausführungen gemein ist dabei, dass jeweils nur eine Bewuchsfläche vorgesehen ist. In einer alternativen Ausführung ist vorgesehen, dass jeder Elektrode eine Bewuchsfläche zugeordnet ist, wobei die Bewuchsflächen in ihren Abmessungen vorteilhafterweise denen der Elektroden entsprechen. Jeweils eine Elektrode bildet dann mit einer Bewuchsfläche eine Einheit aus. Als Elektroden können metallische Gitter, Drahtgeflechte bzw. Drahtgewebe oder metallische Platten, Matten, Platinen oder dergleichen vorgesehen sein. Geeignete Werkstoffe für die Elektroden können u.a. Aluminium, Kupfer, Eisen oder Stahl sein.

Die Pole der Spannungsquelle können auf einfache Weise mittels Kupferdrähten an die Elektroden angelötet sein, wobei die Pole vorteilhafterweise nicht unmittelbar benachbart zueinander sondern möglichst mit größerem Abstand zueinander an die jeweilige Elektrode angeschlossen sind. Anstelle von Kupferdrähten oder Lötverbindungen können auch andere Leitungen oder Anschlüsse vorgesehen sein. Als Spannungsquelle kann eine Batterie vorgesehen sein, die mit Vorteil über einen langen Zeitraum unabhängig von einer äußeren Stromversorgung ist. Die Vorrichtung ist damit weitestgehend unabhängig von möglichen Anschlüssen, insbesondere einer Stromzuführung, und so an einer für die Überwachung idealen Stelle, beispielsweise einer Wand- oder Dachkonstruktion, platzierbar. Eine ausreichende Spannung der Spannungsquelle beträgt beispielsweise 1,5 V oder 9 V, so dass handelsübliche Batterien verwendbar sind.

Nach einer Weiterbildung sind die Elektrode und die wenigstens eine Bewuchsfläche auf einer gemeinsamen, elektrisch nichtleitenden Grundstruktur, insbesondere aus Polyethylen, ausgebildet. Dabei können die Elektroden und/oder das Testmaterial auch in die Grundstruktur eingelassen sein, so dass die Grundstruktur mit den Elektroden oder der wenigstens einen Bewuchsfläche oder mit den Elektroden und der wenigstens einen Bewuchsfläche eine gemeinsame Oberflächenebene aufweist. Alternativ zu Polyethylen kann die Grundstruktur auch aus z. B. Polypropylen oder Polyvinylchlorid bestehen.

Eine Verbindung zwischen Grundstruktur, Elektroden und Testmaterial wird bevorzugt mit einem nicht biozidhaltigen, d.h. biozidfreien, Kleber, insbesondere einem Polymerschaum, erreicht. Der nicht biozidhaltige Kleber gewährleistet, dass die Schimmelpilze nicht in ihrem Wachstum gehemmt werden. Als Kleber geeignet ist beispielsweise Polyurethan. Das Verbinden von Grundstruktur, Elektroden und Testmaterial bei zumindest teilweise übereinander liegend angeordneter Elektrode und Testmaterial erfolgt vorteilhafterweise, indem zuerst der Kleber flächig in einem Bereich der Bewuchsfläche aufgebracht wird, die elektrisch leitenden Strukturen in durch den Kleber ausgebildete Klebebette eingedrückt werden, wobei der Kleber zumindest teilweise durch Poren bzw. Durchbrüche des Materials der Elektrode gedrückt wird und anschließend das Testmaterial aufgepresst wird. Das Testmaterial bildet dann eine Verbindung mit dem durch die Poren bzw. die Durchbrüche gedrückten Kleber aus. Je Bewuchsfläche ist dabei bevorzugt ein Klebebett ausgebildet, das eine vollflächige Verbindung von Elektrode und Testmaterial mit der Grundstruktur gewährleistet.

Anstatt sowohl die Elektrode als auch das Testmaterial mit dem Kleber auf die Grundstruktur aufzubringen, können zumindest die Elektroden auch teilweise in die Grundstruktur eingegossen sein, so dass lediglich das Testmaterial mit dem Kleber aufgebracht ist.

Die zwei Bewuchsflächen sind nach einer Weiterbildung zudem in einer Ebene nebeneinander angeordnet. Der Spalt ist damit durch in einem vorbestimmten Abstand benachbart zueinander angeordnete Ränder der Bewuchsflächen definiert. Die eine elektrisch leitende Verbindung ausbildenden Hyphen der Schimmelpilze müssen demnach die Bewuchsflächen an diesen Rändern überbrücken. Um eine Stärke eines Schimmelpilzbefalls zu ermitteln, können mehrere Paare von Bewuchsflächen einer Vorrichtung in unterschiedlichen Abständen zueinander angeordnet sein, so dass anhand einzelner an den Bewuchsflächen erzeugter elektrischer Signale eine Bewertung des Schimmelpilzwachstums erfolgt. Die Vorrichtung ermöglicht dann nicht nur ein Anzeigen von Bedingungen unter denen Schimmelpilzwachstum möglich ist, sondern auch eine Bewertung der Stärke des Schimmelpilzbefalls. Entsprechend kann auch eine Vorrichtung mit nur einer den Elektroden zugeordneten Bewuchsfläche modifiziert werden, so dass mehrere Teilvorrichtungen, jeweils aus Elektroden und Bewuchsfläche zusammengesetzt, miteinander kombiniert werden.

Die Vorrichtung, bestehend aus Grundstruktur, Elektroden und Testmaterial sowie Spannungsquelle kann weiter in einem luftgängigen Gehäuse angeordnet sein, das wenigstens eine entsprechende Lüftungsöffnung, insbesondere mehrere Lüftungsöffnungen, aufweist, die einen Austausch von Luft zwischen der zu überwachenden Umgebung und einem von dem Gehäuse umschlossenen Raum gewährleisten. Um zu verhindern, dass Schimmelpilzsporen einer angeimpften Bewuchsfläche in die Umgebung gelangen, kann die wenigstens eine Lüftungsöffnung zudem mit einem für die Schimmelpilzsporen undurchlässigen Netz, Gitter oder dergleichen versehen sein. Das Gehäuse ist bevorzugt ebenso wie die Grundstruktur aus einem nichtleitenden, insbesondere dem gleichen, Werkstoff gefertigt. Dabei kann die Grundstruktur auch Teil des Gehäuses sein.

Der Spannungsquelle oder einer Leitung zu der Spannungsquelle ist weiterhin eine Messeinrichtung einer Anzeigeeinheit zugeordnet, so dass wenn Schimmelpilze auf der Bewuchsfläche wachsen, den Spalt zwischen den beabstandeten Elektroden überbrücken und eine elektrisch leitende Verbindung zwischen den Polen der Spannungsquelle ausbilden, mit der Messeinrichtung ein Stromfluss erfasst wird. Dieser Stromfluss wird bevorzugt in ein elektrisches Signal umgesetzt, mit dem ein Alarm, beispielsweise eine Warnleuchte oder ein akustischer Warnton, erzeugbar ist. Mittels eines Senders der Anzeigeeinheit kann das Signal bzw. der Alarm zudem an einen beliebigen Ort, z. B. einen Kontrollraum oder eine Überwachungszentrale, übermittelt werden. Seecontainer können so zentral erfasst, gesteuert und/oder aussortiert oder zusammen mit weiteren Daten ausgewertet werden. Ein akustischer Warnton oder eine Warnleuchte stellen dagegen eine einfache und kostengünstige Möglichkeit zum Anzeigen von Schimmel in Wohnungen dar, wobei dieser Warnton bzw. diese Warnleuchte auch mittels eines Senders einem Kontrollgerät, beispielsweise dem Handy, Smartphone oder Computer eines Besitzers oder Bewohners übermittelt werden kann.

Bei dem Verfahren zum Herstellen einer Vorrichtung zum Anzeigen von Schimmelpilzwachstum in einer zu überwachenden Umgebung, wobei die Vorrichtung wenigstens zwei mit Abstand zueinander angeordnete Elektroden aufweist, wobei die Elektroden jeweils an einen Pol einer Spannungsquelle angeschlossen werden und den Elektroden wenigstens eine Bewuchsfläche zugeordnet wird und zwischen wenigstens einer der Elektroden und der Bewuchsfläche ein elektrisch nichtleitender Spalt ausgebildet wird, zeichnet sich dadurch aus, dass die Bewuchsfläche mit Schimmelpilzsporen von bei einem Schadensfall vermutlich auftretenden Schimmelpilzen beimpft wird, und dass der Spannungsquelle und/oder einer Leitung zu der Spannungsquelle eine Messeinrichtung einer Anzeigeeinheit zugeordnet wird. Je nach Ausgestaltung der Vorrichtung kann das Verfahren zum Herstellen der Vorrichtung weitere Herstellungsschritte umfassen, mit denen die vorgenannten Merkmale der Vorrichtung in dieses ergänzt werden können. Das Verfahren zum Herstellen der Vorrichtung ist demnach mit allen beanspruchten Vorrichtungsmerkmalen kombinierbar.

Ein Ausführungsbeispiel der Erfindung, aus dem sich weitere erfinderische Merkmale ergeben können, ist in der Zeichnung dargestellt. Es zeigen:
- Figur 1:: eine schematische Darstellung einer ersten Ausführung der erfindungsgemäßen Vorrichtung in Draufsicht;
- Figur 2:: eine geschnittene Darstellung der ersten Ausführung gemäß Figur 1 in perspektivischer Ansicht; und
- Figur 3:: eine zweite Ausführung der erfindungsgemäßen Vorrichtung in Draufsicht.

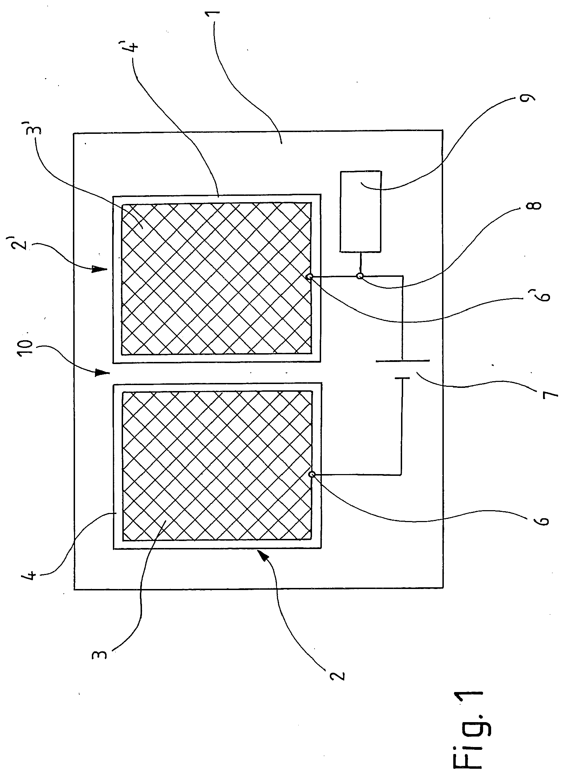

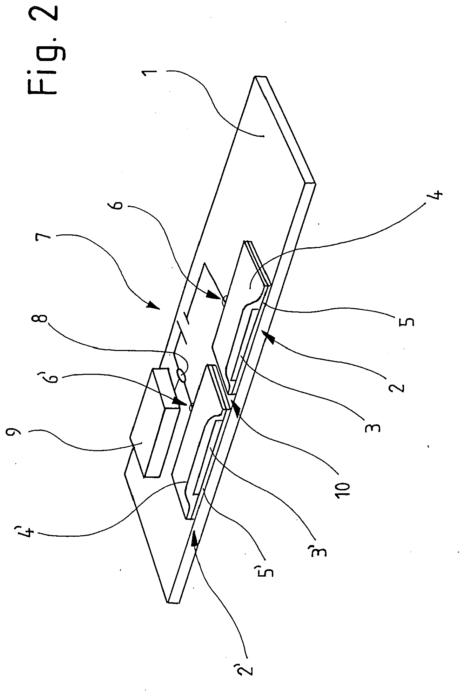

In Figur 1 ist eine erfindungsgemäße Vorrichtung mit auf einer plattenförmigen Grundstruktur 1 aufgebrachten Bewuchsflächen 2, 2' dargestellt. Diese Bewuchsflächen 2, 2' setzen sich aus jeweils einer Elektrode 3, 3' und einem teilweise transparent dargestellten Testmaterial 4, 4' zusammen, die mittels eines nicht biozidhaltigen Klebers 5, 5' mit Abstand zueinander auf der Grundstruktur 1 befestigt sind. Dabei weisen aneinander anliegende Elektrode 3, 3' und Testmaterial 4, 4' der einzelnen Bewuchsflächen 2, 2' jeweils in etwa gleiche Abmessungen auf, wobei deren Flächen weitestgehend kongruent zueinander ausgebildet sind, die Testmaterialien 4, 4' die Elektroden 3, 3' aber mit einem äußeren Rand umlaufend geringfügig überlappen. Die Anordnung der vollflächig aneinander anliegenden Grundstruktur 1, der Elektroden 3, 3' und der Testmaterialien 4, 4' geht insbesondere auch aus Figur 2 hervor, wobei die Elektroden 3, 3' jeweils zwischen der Grundstruktur 1 und den jeweiligen Test-materialien 4, 4' angeordnet sind. An die Elektroden 3, 3' der Bewuchsflächen 2, 2' ist weiterhin jeweils ein Pol 6, 6' einer Spannungsquelle 7 angeschlossen. An einer zwischen der Spannungsquelle 7 und dem Pol 6' ausgebildeten Leitung ist weiterhin eine Messeinrichtung 8 einer Anzeigeeinheit 9 angeordnet mit der ein elektrischer Stromfluss zwischen dem Pol 6' und der Spannungsquelle 7 erfasst werden kann. Zwischen den Bewuchsflächen 2, 2' ist weiterhin ein elektrisch nichtleitender Spalt 10 ausgebildet, durch den verhindert ist, dass zwischen den Polen 6, 6' Strom fließt.

Wenn jetzt unter für Schimmelpilze günstigen Bedingungen diese auf den Bewuchsflächen 2, 2' wachsen, werden durch die Schimmelpilze gebildete Hyphen bei einem bestimmten Schimmelpilzwachstum auch den Spalt 10 überbrücken, so dass durch in den Hyphen der Schimmelpilze enthaltene wässrige Lösung ein Stromfluss zwischen den Polen 6, 6' besteht, der mit der Messeinrichtung 8 erfassbar und mit der Anzeigeeinheit 9 ausgewertet bzw. als Alarm wiedergegeben werden kann.

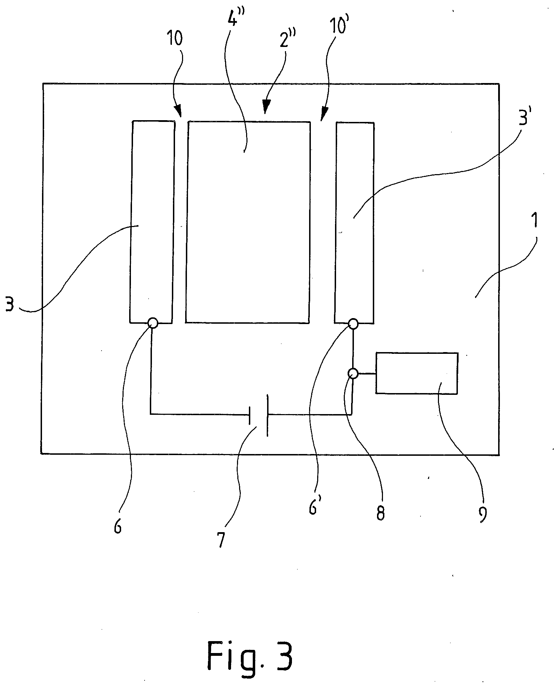

Die in Figur 3 dargestellte zweite Ausführung unterscheidet sich lediglich durch die Anordnung der Elektroden 3, 3' und der Bewuchsfläche 2" von der ersten Ausführung, wobei die lediglich eine Bewuchsfläche 2" zwischen den Elektroden 3, 3' angeordnet ist und wie die Elektroden 3, 3' mit dem Kleber unmittelbar auf der Grundstruktur 1 befestigt ist. Zwischen der Bewuchsfläche 2" und den Elektroden 3, 3' ist jeweils ein Spalt 10, 10' ausgebildet. Gemäß der zweiten Ausführung müssen beide Spalte 10, 10' von den Hyphen der Schimmelpilze überbrückt werden, um einen Stromfluss zwischen den Polen 6, 6' der Spannungsquelle 7 zu erzeugen.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Verfahren zum Anzeigen von Schimmelpilzwachstum in einer zu überwachenden Umgebung,
wobei zwei unter elektrischer Spannung stehende, zueinander beabstandete Elektroden (3, 3') dieser Umgebung ausgesetzt werden, und wobei Schimmelpilzsporen unter für diese günstigen Bedingungen auf wenigstens einer den Elektroden (3, 3') zugeordneten Bewuchsfläche (2, 2') heranwachsen, wobei aus den Schimmelpilzsporen entstehende Schimmelpilze bei einem bestimmten Wachstum eine elektrisch leitende Verbindung zwischen den Elektroden (3, 3') ausbilden und einen Stromkreislauf, zwischen den unter Spannung stehenden Elektroden (3, 3'), schließen, und wobei durch einen durch das Schimmelpilzwachstum ausgelösten Stromfluss in dem Stromkreislauf ein elektrisches Signal erzeugt wird,
**dadurch gekennzeichnet,**
**dass** die Bewuchsfläche (2, 2') gezielt mit Schimmelpilzsporen angeimpft wird.

2. Verfahren nach Anspruch 1, **dadurch gekennzeichnet, dass** Hyphen der Schimmelpilze den Abstand zwischen den Elektroden (3, 3') überbrücken und der Stromkreislauf durch in den Hyphen der Schimmelpilze befindliche wässrige Lösung geschlossen wird.

3. Verfahren nach einem der Ansprüche 1 oder 2, **dadurch gekennzeichnet, dass** mit dem elektrischen Signal ein Alarm ausgelöst wird.

4. Vorrichtung zum Anzeigen von Schimmelpilzwachstum in einer zu überwachenden Umgebung bei der wenigstens zwei Elektroden (3, 3') mit Abstand zueinander angeordnet sind, wobei die Elektroden (3, 3') jeweils an einen Pol (6, 6') einer Spannungsquelle (7) angeschlossen sind und den Elektroden (3, 3') wenigstens eine Bewuchsfläche (2, 2') zugeordnet ist und zwischen wenigstens einer der Elektroden (3, 3') und der Bewuchsfläche ein elektrisch nichtleitender Spalt (10) ausgebildet ist,
**dadurch gekennzeichnet,**
**dass** die Bewuchsfläche (2, 2') mit Schimmelpilzsporen von bei einem Schadensfall vermutlich auftretenden Schimmelpilzen beimpft ist,
**dass** die Vorrichtung in einem luftgängigen Gehäuse angeordnet ist, das wenigstens eine entsprechende Lüftungsöffnung aufweist, und
**dass** der Spannungsquelle (7) und/oder einer Leitung zu der Spannungsquelle (7) eine Messeinrichtung (8) einer Anzeigeeinheit (9) zugeordnet ist.

5. Vorrichtung nach Anspruch 4, **dadurch gekennzeichnet, dass** die Bewuchsfläche (2, 2') wenigstens ein Testmaterial (4, 4') aufweist, dass sich über deren Fläche erstreckt.

6. Vorrichtung nach Anspruch 5, **dadurch gekennzeichnet, dass** das Testmaterial (4, 4') in Abhängigkeit von einer zu überwachenden Umgebung bzw. einem zu überwachenden Gegenstand festgelegt ist.

7. Vorrichtung nach einem der Ansprüche 4 bis 6, **dadurch gekennzeichnet, dass** die Bewuchsfläche (2, 2') mit wenigstens einem Abschnitt zwischen den Elektroden (3, 3') angeordnet ist.

8. Vorrichtung nach einem der Ansprüche 4 bis 7, **dadurch gekennzeichnet, dass** die Bewuchsfläche (2, 2') zwischen den Elektroden (3, 3') angeordnet ist, wobei zu jeder Elektrode (3, 3') ein elektrisch nichtleitender Spalt ausgebildet ist.

9. Vorrichtung nach einem der Ansprüche 4 bis 6, **dadurch gekennzeichnet, dass** jeder Elektrode (3, 3') eine Bewuchsfläche (2, 2') zugeordnet ist, wobei die Bewuchsflächen (2, 2') in ihren Abmessungen denen der Elektroden (3, 3') entsprechen.

10. Vorrichtung nach einem der Ansprüche 4 bis 9, **dadurch gekennzeichnet, dass** die Elektroden (3, 3') ein metallisches Gitter, Drahtgeflecht oder Drahtgewebe oder eine metallische Platte oder Matte aufweisen.

11. Vorrichtung nach einem der Ansprüche 4 bis 10, **dadurch gekennzeichnet, dass** die Elektroden (3, 3') und die Bewuchsfläche (2, 2') auf einer gemeinsamen, elektrisch nichtleitenden Grundstruktur (1) angeordnet sind.

12. Vorrichtung nach Anspruch 11, **dadurch gekennzeichnet, dass** das Testmaterial (4, 4') mit einem nicht biozidhaltigen Kleber (5, 5'), insbesondere einem Polymerschaum, auf die Grundstruktur (1) aufgebracht ist.

13. Vorrichtung nach Anspruch 9, **dadurch gekennzeichnet, dass** die Bewuchsflächen (2, 2') in einer Ebene nebeneinander angeordnet sind.

14. Verfahren zum Herstellen einer Vorrichtung zum Anzeigen von Schimmelpilzwachstum in einer zu überwachenden Umgebung, wobei die Vorrichtung wenigstens zwei mit Abstand zueinander angeordnete Elektroden (3, 3') aufweist, wobei die Elektroden (3, 3') jeweils an einen Pol (6, 6') einer Spannungsquelle (7) angeschlossen werden und den Elektroden (3, 3') wenigstens eine Bewuchsfläche (2, 2') zugeordnet wird und zwischen wenigstens einer der Elektroden (3, 3') und der Bewuchsfläche ein elektrisch nichtleitender Spalt (10) ausgebildet wird,
**dadurch gekennzeichnet,**
**dass** die Bewuchsfläche (2, 2') mit Schimmelpilzsporen von bei einem Schadensfall vermutlich auftretenden Schimmelpilzen beimpft wird, und
**dass** der Spannungsquelle (7) und/oder einer Leitung zu der Spannungsquelle (7) eine Messeinrichtung (8) einer Anzeigeeinheit (9) zugeordnet wird.

## Claims

1. Method for indicating mold growth in an environment to be monitored, wherein two electrodes (3, 3') under electrical voltage spaced apart from one another are exposed to this environment, and wherein mold spores grow under conditions favorable for them on at least one growth surface (2, 2') associated with the electrodes (3, 3'), wherein molds resulting from the mold spores configure an electrically conductive connection between the electrodes (3, 3') with a certain growth and close a current circuit between the electrodes (3, 3') under voltage, and wherein an electrical signal is generated in the current circuit by a current flow triggered by the mold growth, **characterized in that** the growth surface (2, 2') is inoculated with mold spores in a targeted manner.

2. Method according to claim 1, **characterized in that** hyphae of the mold bridge the distance between the electrodes (3, 3') and the current circuit is closed by an aqueous solution located in the hyphae of the molds.

3. Method according to one of claims 1 or 2, **characterized in that** an alarm is triggered by the electrical signal.

4. Device for indicating mold growth in an environment to be monitored, in which at least two electrodes (3, 3') are arranged at a distance from each other, wherein the electrodes (3, 3') are each connected to a pole (6, 6') of a voltage source (7) and the electrodes (3, 3') are associated with at least one growth surface (2, 2') and an electrically non-conductive gap (10) is configured between at least one of the electrodes (3, 3') and the growth surface, **characterized in that** the growth surface (2, 2') is inoculated with mold spores from molds presumably occurring in the event of damage, **in that** the device is arranged in an air-current housing which has at least one corresponding ventilation opening, and **in that** a measuring device (8) of a display unit (9) is assigned to the voltage source (7) and/or a line to the voltage source (7).

5. Device according to claim 4, **characterized in that** the growth surface (2, 2') has at least one test material (4, 4') that extends over its surface.

6. Device according to claim 5, **characterized in that** the test material (4, 4') is determined as a function of an environment to be monitored or an object to be monitored.

7. Device according to one of claims 4 to 6, **characterized in that** the growth surface (2, 2') is arranged with at least one section between the electrodes (3, 3').

8. Device according to one of claims 4 to 7, **characterized in that** the growth surface (2, 2') is arranged between the electrodes (3, 3'), wherein an electrically non-conductive gap is configured for each electrode (3, 3').

9. Device according to one of claims 4 to 6, **characterized in that** a growth surface (2, 2') is associated with each electrode (3, 3'), wherein the growth surfaces (2, 2') correspond in their dimensions to those of the electrodes (3, 3').

10. Device according to one of claims 4 to 9, **characterized in that** the electrodes (3, 3') have a metallic grid, wire fabric or wire mesh or a metallic plate or mat.

11. Device according to one of claims 4 to 10, **characterized in that** the electrodes (3, 3') and the growth surface (2, 2') are arranged on a common, electrically non-conductive basic structure (1).

12. Device according to claim 11, **characterized in that** the test material (4, 4') is applied to the basic structure (1) with a non-biocide-containing adhesive (5, 5'), in particular a polymer foam.

13. Device according to claim 9, **characterized in that** the growth surfaces (2, 2') are arranged next to each other in a plane.

14. Method for producing a device for indicating mold growth in an environment to be monitored, wherein the device has at least two electrodes (3, 3') arranged at a distance from one another, wherein the electrodes (3, 3') in each case are connected to a pole (6, 6') of a voltage source (7) and at least one growth surface (2, 2') is associated with the electrodes (3, 3'), and an electrically non-conductive gap (10) is configured between at least one of the electrodes (3, 3') and the growth surface, **characterized in that** the growth surface (2, 2') is inoculated with mold spores from molds presumably occurring during the event of damage, and that a measuring device (8) of a display unit (9) is associated with the voltage source (7) and/or a line to the voltage source (7).

## Revendications

1. Procédé destiné à afficher le développement de moisissures dans un environnement placé sous surveillance,
lors duquel on expose deux électrodes (3, 3') placées sous tension électrique, écartées l'une de l'autre audit environnement et sous des conditions qui leur sont favorables, des spores de moisissures croissant sur un substrat de développement (2, 2') associé à au moins l'une des électrodes (3, 3'), lors d'un certain développement, des moisissures qui naissent à partir des spores de moisissures établissant une liaison conductrice d'électricité entre les électrodes (3, 3') et fermant un circuit électrique entre les électrodes (3, 3') sous tension et par une circulation de courant dans le circuit électrique, déclenchée par le développement des moisissures, un signal électrique étant généré
**caractérisé en ce qu'**on inocule de manière ciblée des spores de moisissures au substrat de développement (2, 2').

2. Procédé selon la revendication 1, **caractérisé en ce que** des hyphes des moisissures chevauchent l'écart entre les électrodes (3, 3') et **en ce que** le circuit électrique se ferme par la solution aqueuse se trouvant dans les hyphes des moisissures.

3. Procédé selon l'une quelconque des revendications 1 ou 2, **caractérisé en ce qu'**une alarme est déclenchée avec le signal électrique.

4. Dispositif destiné à afficher le développement de moisissures dans un environnement placé sous surveillance,
sur lequel au moins deux électrodes (3, 3') sont placées avec un écart mutuel, les électrodes (3, 3') étant raccordées chacune sur un pôle (6, 6') d'une source de tension (7) et au moins un substrat de développement (2, 2') étant associé aux électrodes (3, 3') et entre au moins l'une des électrodes (3, 3') et le substrat de développement étant conçu un interstice (10) non conducteur d'électricité, **caractérisé**
**en ce que** des spores de moisissures se produisant probablement dans le cas d'un sinistre sont inoculées au substrat de développement (2, 2'),
**en ce que** le dispositif est placé dans un boîtier aéré qui comporte au moins un orifice d'aération correspondant et
**en ce qu'**à la source de tension (7) et/ou à un conduit donnant sur la source de tension (7) est associé un dispositif de mesure (8) d'une unité d'affichage (9).

5. Dispositif selon la revendication 4, **caractérisé en ce que** le substrat de développement (2, 2') comporte au moins une matière de test (4, 4') qui s'étend sur la surface de celui-ci.

6. Dispositif selon la revendication 5, **caractérisé en ce que** la matière de test (4, 4') est déterminée en fonction d'un environnement placé sous surveillance ou d'un objet placé sous surveillance.

7. Dispositif selon l'une quelconque des revendications 4 à 6, **caractérisé en ce que** le substrat de développement (2, 2') est placé par au moins une partie entre les électrodes (3, 3').

8. Dispositif selon l'une quelconque des revendications 4 à 7, **caractérisé en ce que** le substrat de développement (2, 2') est placé entre les électrodes (3, 3'), un interstice non conducteur d'électricité étant conçu vers chaque électrode (3, 3').

9. Dispositif selon l'une quelconque des revendications 4 à 6, **caractérisé en ce qu'**à chaque électrode (3, 3') est associé un substrat de développement (2, 2'), les substrats de développement (2, 2') correspondant par leurs dimensions à celles des électrodes (3, 3').

10. Dispositif selon l'une quelconque des revendications 4 à 9, **caractérisé en ce que** les électrodes (3, 3') comportent une grille métallique, un treillis métallique ou un tissu métallique ou une plaque ou natte métallique.

11. Dispositif selon l'une quelconque des revendications 4 à 10, **caractérisé en ce que** les électrodes (3, 3') et le substrat de développement (2, 2') sont placés sur une structure de base (1) commune, non conductrice d'électricité.

12. Dispositif selon la revendication 11, **caractérisé en ce que** la matière de test (4, 4') est appliqué sur la structure de base (1) à l'aide d'un adhésif (5, 5') ne contenant aucun biocide, notamment d'une mousse polymère.

13. Dispositif selon la revendication 9, **caractérisé en ce que** les substrats de développement (2, 2') sont placés côte à côte dans un plan.

14. Procédé de fabrication d'un dispositif destiné à afficher le développement de moisissures dans un environnement placé sous surveillance, le dispositif comportant au moins deux électrodes (3, 3') placées avec un écart mutuel, lors duquel on raccorde chacune des électrodes (3, 3') sur un pôle (6, 6') d'une source de tension (7) et on associe aux électrodes (3, 3') au moins un substrat de développement (2, 2') et entre au moins l'une des électrodes (3, 3') et le substrat de développement, on conçoit un interstice (10) non conducteur d'électricité,
**caractérisé**
**en ce qu'**on inocule au substrat de développement (2, 2') des spores de moisissures se produisant probablement dans le cas d'un sinistre et en ce qu'on associe à la source de tension (7) et/ou à un conduit donnant sur la source de tension (7) un dispositif de mesure (8) d'une unité d'affichage (9).
